# EUROPÄISCHE PATENTSCHRIFT

(11) **EP 3 466 513 B1**
(45) Veröffentlichungstag und Bekanntmachung des Hinweises auf die Patenterteilung: **13.05.2020**
(21) Anmeldenummer: 18195020.5
(22) Anmeldetag: 18.09.2018
(51) Int. Cl.: B01D 21/00, B01D 21/24, E03F 5/10, E03F 5/12, E03F 5/14

(54) **REGENÜBERLAUFBECKEN ZUM SAMMELN UND SPEICHERN VON WASSER**
RAINWATER OVERFLOW FOR COLLECTING AND STORING WATER
TROP-PLEIN D'EAUX PLUVIALES DESTINÉ À COLLECTER ET À STOCKER DE L'EAU

(30) Priorität: 04.10.2017 DE 202017106033 U
(43) Veröffentlichungstag der Anmeldung: 10.04.2019
(73) Patentinhaber: Amiblu Technology AS, 3241 Sandefjord (NO)
(72) Erfinder: NAPIERSKI, Uwe, 93152 Nittendorf (DE); PLETZ, Uwe, 04416 Markkleeberg (DE)
(74) Vertreter: Stippl, Hubert

(56) Entgegenhaltungen:
- EP-A1- 2 508 686
- EP-A1- 3 309 310
- DE-A1- 2 743 580
- US-A1- 2006 196 827

## Beschreibung

Die vorliegende Erfindung betrifft ein Regenüberlaufbecken zum Sammeln und Speichern von Wasser gemäß dem Oberbegriff des Anspruchs 1.

### Technologischer Hintergrund

Regenüberlaufbecken werden in sogenannten Mischsystemen der Entwässerungstechnik eingesetzt, um z. B. eine Pufferwirkung bei plötzlich auftretenden Niederschlagsereignissen wie Starkregen zu erzielen. Dadurch kann eine Entwässerung großer Flächen z. B. im Einzugsgebiet von Städten oder an Autobahnen erfolgen. Bei Mischsystemen wird insbesondere Schmutz-, Fremd- und Regenwasser gemischt (als sogenanntes Mischwasser) in einer gemeinsamen Leitung abgeleitet.

Gattungsgemäße Regenüberlaufbecken können als Fangbecken, Durchlaufbecken oder Verbundbecken ausgestaltet sein. Fangbecken haben die Aufgabe, den Erstabfluss (Spülstoß) zu speichern und gedrosselt dem Kanalnetz oder einer Abwasserbehandlungsanlage zuzuführen. Durchlaufbecken haben die Aufgabe, Mischwasser zu speichern, gedrosselt dem Kanalnetz oder einer Abwasserbehandlungsanlage zuzuführen und vor der Entlastung über einen Klärüberlauf einer mechanischen Reinigung zu unterziehen, z. B. durch Sedimentation oder Grobstoffrückhaltung. Verbundbecken sind eine Kombination aus Fangbecken und Durchlaufbecken.

Ein Regenüberlaufbecken der gattungsgemäßen Art besitzt in der Regel einen Zulauf und einen Ablauf, jeweils zum Anschluss an ein Kanalnetz, und eine Beckenkammer, die je nach Ausgestaltung und Funktion z. B. eine Speicherkammer oder eine Sedimentationskammer ist. Die Fließrichtung des Wassers erfolgt in der Regel vom Zulauf zum Ablauf. Oftmals ist dem Ablauf ein zusätzliches Drosselbauwerk mit einem Drosselorgan nachgeschaltet, welches zum Drosseln des Wasserflusses dient.

In der Regel besitzen Regenüberlaufbecken einen Beckenüberlauf, welcher nach der Beckenkammer angeordnet ist und somit nach der Füllung der Beckenkammer wirksam wird (d. h. "anspringt"). Das Wasser des Beckenüberlaufs wird z. B. über einen Auslauf bzw. einen Kanal (Entlastungskanal) z. B. in ein Auslaufbauwerk, eine Vorflut (z. B. Gewässer) oder dergleichen entlastet. Der Beckenüberlauf ist z. B. als seitlich angeströmte, feste Schwelle (Streichwehr) mit ein- oder beidseitigem Überlauf ausgebildet. Ferner kann an die Beckenkammer ein zusätzlicher Klärüberlauf angeschlossen sein, über den mechanisch geklärtes Wasser entweder gedrosselt oder ungedrosselt abgeleitet werden kann.

Das Regenüberlaufbecken kann zum Kanalnetz im Hauptschluss, im Nebenschluss oder im unechten Nebenschluss angeordnet sein. Im Hauptschluss sind Beckenkammer und Kanalnetz sowohl bei der Füllung als auch bei der Entleerung hydraulisch gekoppelt, d. h. die Beckenkammer und das Kanalnetz füllen und entleeren sich gleichzeitig. Im Nebenschluss sind Beckenkammer und Kanalnetz durch ein Trennbauwerk hydraulisch entkoppelt, d. h. die Beckenkammer füllt und entleert sich später als das Kanalnetz. Im unechten Nebenschluss ist keine eindeutige Zuordnung zum Haupt- oder Nebenschluss möglich, da bei der Füllung und Entleerung zeitweise ein Hauptschluss und zeitweise ein Nebenschluss vorliegt.

Bei Mischwassereinleitungen muss in der Regel die Einleitung von Grobstoffen oder anderem unansehnlichen Material auf ein annehmbares Maß beschränkt werden (vgl. z. B. DIN EN 752). Hierzu sollten Regenüberlaufbecken mit Rechen- oder Siebanlagen ausgestattet werden, die mechanisch gereinigt werden können oder durch Reinigungsvorrichtungen automatisch gereinigt werden. Hierbei haben sich Rechen und Feinsiebe mit Schlitz- und Lochweiten von 4-8 mm bewährt. Diese werden in der Regel an oder auf der Schwelle angebracht, über die z. B. zum Entlastungskanal, Gewässer oder dergleichen hin entlastet wird. Nach einem starken Entlastungsvorgang ist in der Regel mit dem völligen Zusetzen von nicht maschinell gereinigten Rechen und Sieben zu rechnen. Dann ist regelmäßig eine manuelle Reinigung der Siebe und Rechen notwendig. Ferner können die Rechen und Siebe so betrieben werden, dass sich im Durchflussbereich eine Filterschicht aus den anlagernden Schwimm- und Schwebstoffen aufbaut, die als zusätzlicher Filter wirkt.

Die Nachrüstung bestehender Regenüberlaufbecken mit derartigen Sieben und Rechen ist oftmals problematisch, da sich z. B. die Rückstauhöhe verändern kann oder der Einbau der Reinigungsvorrichtung aufgrund der Maße der Wehrschwelle zum Beckenüberlauf erschwert wird oder gar nicht erfolgen kann.

### Druckschriftlicher Stand der Technik

Ein Regenüberlaufbecken gemäß dem Oberbegriff des Anspruchs 1 ist aus der DE 89 15 629 U1 bekannt. Hierbei sind ein Regenbecken und ein diesem nach geschaltetes Hilfsbecken durch eine Überfallwand getrennt, die als Überlaufschwelle dient. Als Reinigungsvorrichtungen dienen entweder eine Siebanordnung, die zwischen einer Tauchwand und einer weiteren Wehrschwelle angeordnet ist, oder eine Tauchwand an der Oberkante der Überfallwand zum Auffangen von groben, auf der Wasseroberfläche schwimmenden Gegenständen vor Eintritt derselben in das Hilfsbecken. Des Weiteren ist in der Überfallwand eine Öffnung mit einer Rückschlagklappe zur Gewährleistung eines Rückflusses von dem Hilfsbecken in das Regenbecken vorgesehen.

Die DE 10 2005 019 001 A1 beschreibt eine Siebvorrichtung zur Grobreinigung von Wasser am Überlauf eines Sammelbeckens. Die Siebvorrichtung ist als Siebtrommel ausgestaltet, die an einer Tauchwand rotierbar gelagert ist und sich im Bereich einer Überlaufkante oder Entlastungsschwelle des Sammelbeckens befindet. Die Rotationsachse der Siebtrommel verläuft parallel zur Entlastungsschwelle des Sammelbeckens. Das Wasser durchfließt hierbei die Siebtrommel, wodurch im Wasser befindliche Schmutzstoffe an der Oberfläche der Siebtrommel verbleiben. Die Oberfläche der Siebtrommel kann durch die Rotation der Siebtrommel gegen eine an der Entlastungsschwelle angebrachte Abstreifeinrichtung, z. B. einer Bürste, einem Kamm oder dergleichen, gereinigt werden. Der Rotationsantrieb der Siebtrommel erfolgt mittels Fremdenergie, z. B. durch einen motorischen Drehantrieb. Die Siebvorrichtung besitzt einen komplizierten und störungsanfälligen Aufbau, insbesondere bedingt durch die Rotationsfähigkeit, den motorischen Antrieb und die komplizierte Ausgestaltung der Konstruktion, wie z. B. die Anordnung der Tauchwand. Die Länge der Siebtrommel bzw. die vom Wasser durchströmte Oberfläche der Siebtrommel wird hierbei aufgrund der parallelen Anordnung zur Entlastungsschwelle durch die Länge der Entlastungsschwelle beschränkt, d. h. die Länge der Entlastungsschwelle wirkt sich auf die Reinigungswirkung aus. Dadurch können sich gerade bei länglichen Sammelbecken und kurzen Entlastungsschwellen Probleme hinsichtlich einer effektiven Reinigungswirkung ergeben. Darüber hinaus bedingt die Rotationsfunktion der Siebtrommel einen erhöhten Wartungs- und Reinigungsaufwand, um die rotierende Bewegung auch bei langer Betriebsdauer zu gewährleisten, z. B. durch vermehrtes Ölen oder Nachfetten im Drehbereich. Zudem verursacht ein motorischer Antrieb zusätzliche Kosten und Wartungsarbeiten. Ferner muss die Abstreifeinrichtung regelmäßig gereinigt und/oder gewechselt werden. Darüber hinaus wird die Bildung einer reinigenden Filterschicht durch den fortwährenden Abstreifvorgang verhindert.

Aus der EP 2 508 686 B1 ist eine Rückhalteanlage für Niederschlagwasser bekannt, mit einem zwischen dem Einlauf und dem Auslauf befindlichen Stauraumkanal und einem insbesondere einlaufseitigen Überlaufschacht mit Entlastungskanal. Zudem ist ein langgezogenes Rückhalteelement im Stauraumkanal angeordnet, welches sich vom Überlaufschacht aus entlang des Stauraumkanals in Richtung Auslauf erstreckt. Das Rückhalteelement dient hierbei dazu, im Falle eines Anstauens von Wasser im Stauraumkanal Schwebemittel und Schmutzstoffe zurückzuhalten und das Wasser durch das Rückhalteelement hindurch hin zum Überlaufschacht passieren zu lassen.

US 2006/196827 A1 offenbart ein Klärbecken mit einem Zulauf, einem Ablauf und zwei Beckenkammern, die von einer Trennwand getrennt sind. Die erste Beckenkammer ist in der Nähe des Abwasserzulaufs und die zweite Beckenkammer in der Nähe des Abwasserablaufs angeordnet. Der Abwasserablauf ist etwas tiefer als der Abwasserzulauf angeordnet. In der ersten Beckenkammer befindet sich eine Tauchpumpe, die das verunreinigte Abwasser nach oben pumpt zur Schaffung eines Recyclingstroms, sodass die Zersetzung bzw. der Abbau des Abwassers beschleunigt wird. Die Trennwand enthält eine Mehrzahl von Durchgangslöchern oder dadurch verlaufenden Rohren, die einen Austausch des Wassers zwischen der ersten und der zweiten Beckenkammer erlauben. Dabei fließt das einleitfähige Abwasser von der ersten Beckenkammer durch die Durchgangslöcher oder die darin verlaufenden Rohre in die zweite Beckenkammer. Der Wasserspiegel in beiden Beckenkammern ist gleich hoch. Sobald der Wasserspiegel oberhalb des Ablaufs ist, läuft das Wasser ab. Dabei werden die in der ersten Beckenkammer vorhandenen Suspensionen durch die Trennwand gehindert, in die zweite Beckenkammer überzugehen. Außerdem wird die Strömungsgeschwindigkeit der Suspensionen in der ersten Beckenkammer durch die Trennwand reduziert, sodass sich diese einfach in der ersten Beckenkammer absetzen können. Die Durchgangsbohrungen bzw. die Rohre in den Durchgangsbohrungen sind Richtung erster Beckenkammer geneigt, wodurch die Strömungsgeschwindigkeit des Abwassers von der ersten Beckenkammer in die zweite Beckenkammer reduziert wird, was wiederum auch eine einfache Absetzung von Ablagerungen in der ersten Beckenkammer bewirkt.

Die EP 3 309 310 A1 beschreibt ein Regenüberlaufbecken mit einer Beckenkammer, einem Beckenüberlauf sowie einem Klärüberlauf. Von einer Öffnung in einer den Beckenüberlauf von der Beckenkammer trennenden Wand aus erstreckt sich ein länglichen Rückhalteelement in die Beckenkammer hinein. Auf der gegenüberliegenden Seite der Öffnung befindet sich ein Gefälle, welches hin zur Öffnung abfällt. Des Weiteren erstreckt sich ein abgewinkeltes Rückhalteelement durch eine Öffnung in einer den Klärüberlauf von der Beckenkammer trennende Wand hindurch in den Klärüberlauf hinein. Der abgewinkelte Endbereich bildet dort einen Klärüberlauf.

### Aufgabe der vorliegenden Erfindung

Die Aufgabe der vorliegenden Erfindung besteht darin, ein Regenüberlaufbecken der gattungsgemäßen Art mit einer einfacheren und kostengünstigen Konstruktion zur Verfügung zu stellen, bei welchem die Reinigungswirkung verbessert und der Wartungsaufwand verringert wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Das Regenüberlaufbecken umfasst eine Rückhaltewand mit einer Durchgangsöffnung, die zwischen Beckenkammer und Beckenüberlauf angeordnet ist und dazu hergerichtet ist, in der Beckenkammer anfallendes Wasser aufzustauen. Zudem ist ein Stauraum vorgesehen, in dem sich von der Beckenkammer abfließendes Wasser aufstaut, um anschließend über eine Wehrschwelle in den Beckenüberlauf zu gelangen. Ferner ist als Reinigungsvorrichtung mindestens ein zumindest bereichsweise wasserdurchlässiges, vorzugsweise langgestrecktes, bewegungsfestes Rückhalteelement vorgesehen.

Erfindungsgemäß erstreckt sich das Rückhalteelement in die Beckenkammer hinein, sodass das aus der Beckenkammer durch die Durchgangsöffnung in den Stauraum abfließende Wasser durch das Rückhalteelement hindurchströmt und dabei von Grobstoffen gereinigt wird. Ferner werden der Stauraum sowie die Wehrschwelle durch einen sich von der Rückhaltewand in den Beckenüberlauf erstreckenden Verbindungskanal gebildet, der insbesondere als gekapselter Verbindungskanal ausgestaltet ist. Der Verbindungskanal kann unmittelbar in den Beckenüberlauf hineinragen, wodurch sich der Platzaufwand in erheblicher Art und Weise reduzieren lässt. Darüber hinaus kann eine schnellere Fertigstellung des Regenüberlaufbeckens erreicht werden. Durch die spezielle Anordnung des Rückhalteelements wird die Länge des Rückhalteelements bzw. die vom Wasser durchströmte Oberfläche des Rückhalteelements nicht durch die Länge der Rückhaltewand und/oder der Wehrschwelle begrenzt. Die Länge der Rückhaltewand wirkt sich daher nicht auf die Reinigungswirkung des Rückhalteelements aus. Dadurch, dass das Rückhalteelement bewegungsfest, d. h. nicht motorisch oder hydraulisch rotierbar, ausgestaltet ist, verringert sich der Wartungsaufwand erheblich, da keine rotierenden oder antreibenden Bestandteile gewartet werden müssen. Zudem ist die Nachrüstung der Reinigungsvorrichtung in einem gattungsgemäßen Regenüberlaufbecken kostengünstig und in einfacher Weise realisierbar. Überraschenderweise hat sich gezeigt, dass sich die Rückstauhöhe bei einer Nachrüstung aufgrund der Orientierung des Rückhalteelements in die Beckenkammer hinein nicht ändert, d. h. der maximale Wasserspiegel bleibt im Wesentlichen gleich. Dadurch ist es in der Regel bei einer Nachrüstung bzw. einem Umbau eines bestehenden Regenüberlaufbeckens nicht notwendig, die Stauhöhe neu zu berechnen und diese genehmigen zu lassen. Vorzugsweise weist der Verbindungskanal einen vorzugsweise abgewinkelten, insbesondere rechtwinkelig abgewinkelten, Abschnitt auf, der sich in Aufstaurichtung erstreckt, d. h. nach oben zur Decke des Regenüberlaufbeckens hin. Dadurch wird erreicht, dass sich das Wasser innerhalb des Verbindungskanals aufstaut, d. h. um eine Stauwirkung im Verbindungskanal zu erzielen.

Gemäß einer bevorzugten Ausgestaltung der Erfindung weist der Verbindungskanal eine in den Beckenüberlauf mündende Entlastungsöffnung auf. Die Entlastungsöffnung kann hierbei beispielsweise als runde Rohröffnung an der oberen Stirnseite des nach oben gerichteten Abschnitts ausgestaltet sein.

Zweckmäßigerweise kann der Verbindungskanal zumindest im Wesentlichen in Verlängerung des Rückhaltelements verlaufend angeordnet sein, d. h. der Verbindungskanal ist dem Rückhalteelement in Fließrichtung des Wassers direkt nachgeschaltet.

Ferner können der Verbindungskanal und das Rückhalteelement als gemeinsames Bauteil ausgebildet sein. Dadurch kann der Verbindungskanal als herstellerseitig vorkonfektioniertes, handhabbares Teil zur Verfügung gestellt werden, wodurch die Installations- und Montagearbeiten erheblich vereinfacht und kostengünstiger gestaltet werden können. Beispielsweise kann das Rückhalteelement sowie der daran anschließende Verbindungskanal als einseitig abgewinkeltes GFK-Rohr (Glasfaser-verstärktes-Kunststoffrohr) gefertigt sein.

Vorzugsweise ist ein Notüberlauf zwischen Beckenkammer und Beckenüberlauf vorgesehen. Dadurch wird gewährleistet, dass im Falle einer Überlastung des Abflusses durch die Rückhalteelemente, z. B. bei sehr starken Niederschlägen oder verstopften Rückhalteelementen, z. B. ein Durchfluss in der Rückhaltewand oberhalb der Durchgangsöffnung genutzt werden kann, um Beschädigungen oder einen Rückstau zum Zufluss hin zu vermeiden. Die Sicherheit und die Funktion des Regenüberlaufbeckens werden durch einen derartigen Notüberlauf erheblich verbessert. Zudem können optional auch Notüberläufe an der Beckenkammer, dem Beckenüberlauf oder im Bereich zwischen Zulauf und Beckenüberlauf vorgesehen sein.

Zweckmäßigerweise kann mindestens eine Sensoreinrichtung vorgesehen sein, um den Verschmutzungsgrad der Rückhalteelemente zu ermitteln. Dadurch können die Reinigungsintervalle individuell an den Verschmutzungsgrad angepasst werden, wodurch Zeit und Kosten gespart werden können. Beispielsweise können eine oder mehrere Druckmessdose(n) und/oder Wasserstandsensor(en) im Bereich der Beckenkammer und/oder im Bereich des Stauraums oder des Beckenüberlaufs vorgesehen sein. Der Druck- bzw. Wasserstandunterschied kann hierbei herangezogen werden, um auf eine Verschmutzung der Rückhalteelemente zu schließen, indem z. B. ein ausreichend großer Messwertunterschied der Sensoren in Beckenkammer und Stauraum oder Beckenüberlauf eine Durchflussverminderung im Bereich der Rückhalteelemente oder der Durchgangsöffnung signalisiert. Im Falle eines Umbaus oder einer Nachrüstung eines bestehenden Regenüberlaufbeckens können auch schon vorhandene Sensoren für eine derartige Verschmutzungsgradbestimmung umfunktioniert werden.

Ferner kann das Regenüberlaufbecken einen der Beckenkammer nachgeschalteten Klärüberlauf aufweisen, wobei das Wasser von der Beckenkammer zum Klärüberlauf durch eine Klärüberlauföffnung im Bereich der Wandung des Klärüberlaufs strömt.

Vorzugsweise ist hierbei ein zusätzliches Rückhalteelement innerhalb der Beckenkammer vorgesehen, welches sich vom Klärüberlauf aus in die Beckenkammer hinein erstreckt, wobei das von der Beckenkammer durch die Klärüberlauföffnung in den Klärüberlauf abfließende Wasser durch das zusätzliche Rückhalteelement hindurchströmt und dabei gereinigt wird.

Zweckmäßigerweise kann das zusätzliche Rückhalteelement am Klärüberlauf eine Zulaufvorrichtung im Bereich der Klärüberlauföffnung aufweisen. Die Zulaufvorrichtung umfasst einen im Wesentlichen nach oben zur Decke des Regenüberlaufbeckens hin gerichteten abgewinkelten Abschnitt.

Der abgewinkelte Abschnitt umfasst einen Entlastungsausgang, der sich unterhalb der Wasserspiegellage des Beckenüberlaufs befindet. Gemäß einer bevorzugten Ausgestaltungsvariante wird der Entlastungsausgang durch mehrere Austrittsöffnungen gebildet, die z. B. radial am abgewinkelten Abschnitt der Zulaufvorrichtung angeordnet sind. Beispielsweise kann es sich bei der Zulaufvorrichtung um einen Rohrkrümmer mit aufgesetzten Klärschlitzen handeln. Die Klärschlitze bzw. die Austrittsöffnungen können dabei durch Stege des Rohrkrümmers gebildet werden.

In bevorzugter Weise kann das Rückhalteelement derart ausgestaltet sein, dass wasserundurchlässige Bereiche vorgesehen sind, die z. B. der Stabilitätsverbesserung oder der Anbringung von Befestigungen dienen. Die wasserdurchlässigen Bereiche können gemäß einer bevorzugten Ausgestaltung des Rückhalteelements eine runde, eckige und/oder geschlitzte Perforation aufweisen, sodass eine Gitter-, Sieb- und/oder Netzstruktur entsteht. Die Perforation liegt bevorzugt im Bereich von 4-10 mm x 4-10 mm. Beispielsweise können durch ein Gitter von 8 mm x 8 mm 100 % aller Schmutzstoffe mit einer Korngröße von > 8 mm, 50 % aller Schmutzstoffe mit einer Korngröße von 4 mm und 25 % aller Schmutzstoffe mit einer Korngröße von 2 mm zurückgehalten werden. Überraschenderweise hat sich gezeigt, dass sich bei einer derartigen Ausgestaltung der Rückhalteelemente in Kombination mit der beschriebenen Anordnung der Rückhalteelemente eine Filterschicht aus Schwimm- und Schwebstoffen im Bereich der Rückhalteelemente bildet, die im Vergleich zu bisher bekannten Filterschichten über einen sehr langen Zeitraum wasserdurchlässig bleibt. Die Betriebsdauer und die Reinigungsfunktion können dadurch in erheblichem Maße verbessert werden. Vorzugsweise können entlang des Beckenüberlaufs, der Rückhaltewand und/oder des Klärüberlaufs mehrere, vorzugsweise parallel zueinander angeordnete, Rückhalteelemente vorgesehen sein. Daraus resultiert der Vorteil, dass die vom Wasser durchströmte Gesamtoberfläche und somit die Reinigungswirkung erhöht werden kann, indem ein großer Teil der Beckenkammer für die Installation von Rückhalteelementen genutzt werden kann. Dadurch wird eine möglichst große die Reinigungswirkung herbeiführende Oberfläche geschaffen, sodass auf eine kontinuierlich begleitende Reinigungsvorrichtung, wie z. B. eine Abstreifeinrichtung, verzichtet werden kann.

Gemäß einer besonderen Ausgestaltung der vorliegenden Erfindung ist der Verbindungskanal als gemeinsamer Verbindungskanal ausgebildet, welcher sich in die Beckenkammer hinein erstreckt und in das das Rückhalteelement mündet. Vorzugsweise kann hierbei eine Mehrzahl von parallel angeordneten Rückhalteelementen vorgesehen sein, die in den gemeinsamen Verbindungskanal münden und sich im Wesentlichen senkrecht zum gemeinsamen Verbindungskanal in die Beckenkammer hinein erstrecken. Dadurch kann die Raumaufteilung der Beckenkammer für die Installation von Rückhalteelementen zusätzlich optimiert werden. Ferner kann der Installations- und Fertigungsaufwand sowie der Platzbedarf in erheblichem Maße verringert werden.

In vorteilhafter Weise kann als Rückhalteelement ein rohrförmiges, vorzugsweise zylinderförmiges, Element vorgesehen sein. Ferner kann das rohrförmige Rückhalteelement hierbei z. B. einen runden oder eckigen Querschnitt aufweisen. Durch die unterschiedliche Ausgestaltung des Querschnitts kann das Rückhalteelement individuell an die Einbausituation im jeweiligen Regenüberlaufbecken angepasst werden. Ferner kann das Rückhalteelement aus korrosionsbeständigem Material gefertigt sein. Daraus resultiert der Vorteil, dass das Rückhalteelement äußerst robust ist und eine lange Haltbarkeit besitzt.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte Schnittdarstellung eines Regenüberlaufbeckens mit Trennbauwerk gemäß dem Stand der Technik;
- Fig. 2: eine vereinfachte Schnittdarstellung einer ersten Ausgestaltung des erfindungsgemäßen Regenüberlaufbeckens mit Trennbauwerk;
- Fig. 3a: eine vereinfachte Schnittdarstellung des Beckenüberlaufs aus Fig. 2;
- Fig. 3b: eine vereinfachte Schnittdarstellung des Beckenüberlaufs aus Fig. 3a mit Schüttung;
- Fig. 4: eine vereinfachte Schnittdarstellung eines Regenüberlaufbeckens ohne Trennbauwerk gemäß dem Stand der Technik;
- Fig. 5: eine vereinfachte Schnittdarstellung einer weiteren Ausgestaltung des erfindungsgemäßen Regenüberlaufbeckens ohne Trennbauwerk;
- Fig. 6: eine vereinfachte Schnittdarstellung einer weiteren Ausgestaltung des Regenüberlaufbeckens aus Fig. 5 mit Wasserstandsmesser;
- Fig. 7: eine vereinfachte perspektivische Draufsicht des Regenüberlaufbeckens aus Fig. 5;
- Fig. 8: eine vereinfachte perspektivische Draufsicht einer weiteren Ausgestaltung des erfindungsgemäßen Regenüberlaufbeckens mit gemeinsamen Zulaufelement;
- Fig. 9: eine vereinfachte Schnittdarstellung einer weiteren Ausgestaltung des Regenüberlaufbeckens aus Fig. 5 mit Klärüberlauf;
- Fig. 10a: eine vereinfachte Schnittdarstellung eines Klärüberlaufs gemäß dem Stand der Technik, sowie
- Fig. 10b: eine vereinfachte Schnittdarstellung eines Klärüberlaufs eines erfindungsgemäßen Regenüberlaufbeckens.

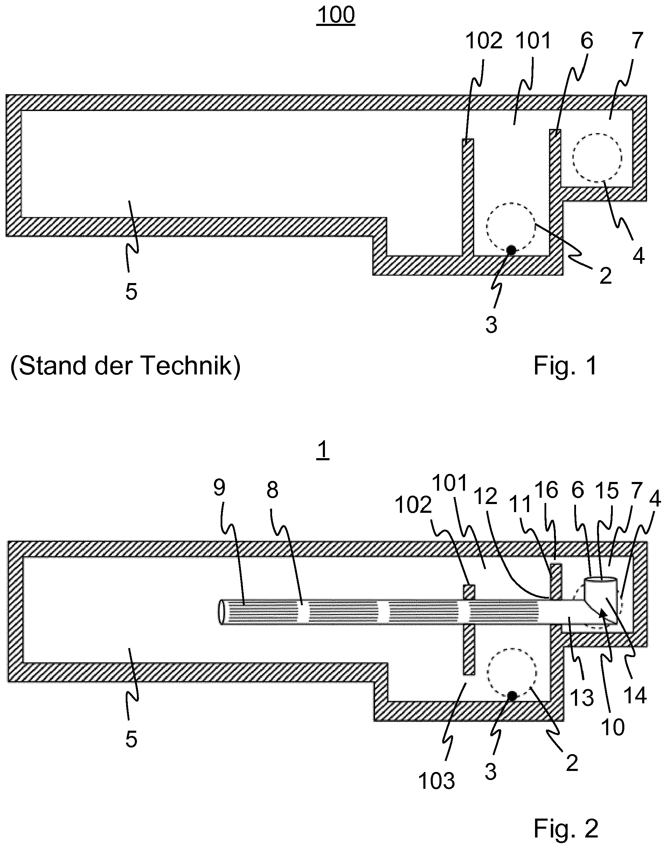

Bezugsziffer 100 in Fig. 1 bezeichnet ein Regenüberlaufbecken gemäß dem Stand der Technik. Das Regenüberlaufbecken 100 besitzt einen Zulauf 2, einen Ablauf 3, einen Auslauf 4 sowie eine Beckenkammer 5. Die Strömungsrichtung des Wassers erfolgt in der Regel vom Zulauf 2 hin zum Ablauf 3. Der Zulauf 2 sowie der Ablauf 3 sind hierbei am Trennbauwerk 101 angeordnet. Ferner ist das Trennbauwerk 101 über eine Schwelle 102 von der Beckenkammer 5 getrennt und über eine Wehrschwelle 6 von einem Beckenüberlauf 7 getrennt. Dadurch wird das Wasser im Trennbauwerk 101 entlang der Schwelle 102 und der Wehrschwelle 6 vom Zulauf 2 zum Ablauf 3 hin geleitet. Zweckmäßigerweise kann dem Ablauf 3 eine, in Fig. 1 nicht dargestellte, Drosseleinrichtung, z. B. ein Drosselbauwerk mit Drosselorgan oder eine Drosselleitung, nachgeschaltet sein. Ferner ist dem Beckenüberlauf 7 der Auslauf 4 nachgeschaltet, der dazu dient das Wasser des Beckenüberlaufs 7 abzuleiten.

Die Beckenkammer 5 und der Beckenüberlauf 7 sind durch das Trennbauwerk 101 hydraulisch entkoppelt, d. h. die Beckenkammer 5 ist im Nebenschluss angeordnet. Wenn der Wasserspiegel im Trennbauwerk 101 bis über die Höhe der Schwelle 102 steigt, z. B. infolge eines Starkregenereignisses, strömt das Wasser vom Trennbauwerk 101 über die Schwelle 102 in die Beckenkammer 5. Die Beckenkammer 5 wird dadurch mit Wasser gefüllt. Steigt der Wasserspiegel im Verlauf des Regenereignisses nach dem Befüllen der Beckenkammer 5 weiter bis auf die Oberkante der Wehrschwelle 6 an, strömt das Wasser über die Wehrschwelle 6 in den Beckenüberlauf 7. Das Wasser des Beckenüberlaufs 7 kann z. B. über den Auslauf 4 entlastet werden, wie z. B. in einen nachgeschalteten Entlastungskanal, ein Gewässer (Vorflut) oder dergleichen. Zudem kann das Wasser über eine in den Figuren nicht dargestellte Pumpe aus der Beckenkammer 5 wieder abgepumpt und dem Kanalnetz zugeführt werden.

Nach jedem erfolgten Regenereignis können sich Verschmutzungen z. B. im Bereich des Trennbauwerks 101, der Beckenkammer 5 und/oder des Beckenüberlaufs 7 ablagern. Um eine Verschmutzung des Beckenüberlaufs 7 und zugleich eine Grobreinigung des in den Beckenüberlauf 7 strömenden Wassers bzw. des aus dem Beckenüberlauf 7 zum Auslauf 4 hin strömenden Wassers zu erzielen, werden gemäß dem Stand der Technik beispielsweise, in Fig. 1 nicht dargestellte, Rechen oder Siebvorrichtungen im oberen Bereich der Wehrschwelle 6 angebracht, die der Schmutzstoffrückhaltung dienen.

Bezugsziffer 1 in Fig. 2 bezeichnet ein erfindungsgemäßes Regenüberlaufbecken. Innerhalb der Beckenkammer 5 ist ein vorzugsweise langgestrecktes, starres, bewegungsfestes und zumindest teilweise wasserdurchlässiges Rückhalteelement 8 angeordnet. Das Rückhalteelement 8 besitzt Bereiche mit einer Perforation 9, die rund, eckig oder geschlitzt ausgestaltet sein kann, sodass eine Gitter-, Sieb- und/oder Netzstruktur entsteht. Vorzugsweise liegt die Perforation 9 im Bereich von 4-10 mm x 4-10 mm. Die mit einer Perforation 9 ausgestatteten Oberflächenbereiche bewirken dadurch eine Reinigung des die Perforation 9 durchströmenden Wassers. Infolgedessen wirkt sich die Gesamtgröße der mit einer Perforation 9 ausgestatteten Oberfläche des Rückhalteelements 8 auf die Reinigungsfunktion des Rückhalteelements 8 aus.

Das Trennbauwerk 101 ist durch eine Ausnehmung 103 mit der Beckenkammer 5 verbunden, sodass das Wasser direkt vom Zulauf 2 hin zur Beckenkammer 5 gelangt. Die Ausnehmung 103 kann z. B. durch eine Umbaumaßnahme in bestehenden Regenüberlaufbecken geschaffen werden und kann sich hierbei über die gesamte Länge der Schwelle 102 oder nur über einen bestimmten Bereich der Schwelle 102 erstrecken. Hierdurch entsteht eine hydraulische Kopplung des Trennbauwerks 101 und der Beckenkammer 5. Von der Schwelle 102 verbleibt lediglich ein Teilabschnitt, welcher je nach Ausgestaltung des Regenüberlaufbeckens 1 auch ganz entfernt werden kann. Ferner ist das Trennbauwerk 101 über eine Rückhaltewand 11 vom Beckenüberlauf 7 getrennt.

Das Rückhalteelement 8 umfasst einen Verbindungskanal 13, der sich durch eine Durchgangsöffnung 12 innerhalb der Rückhaltewand 11 in den Beckenüberlauf 7 hinein erstreckt. Durch das Rückhalteelement 8 bzw. den Verbindungskanal 13 wird hierbei ein Stauraum 10 festgelegt, der in bevorzugter Weise zumindest teilweise innerhalb des Beckenüberlaufs 7 angeordnet ist. Durch einen abgewinkelten Abschnitt 14 des Rückhalteelements 8 wird die Staufunktion des Stauraums 10 erzeugt. Der Abschnitt 14 erstreckt sich hierbei im Wesentlichen in Aufstaurichtung des Wassers, d. h. nach oben zur Decke des Regenüberlaufbeckens 1 hin. Zudem weist der Abschnitt 14 am vom Stauraum 10 entfernten Ende, d. h. am oberen Ende, eine Entlastungsöffnung 15 zur Entlastung des aufgestauten Wassers auf. Die Wehrschwelle 6 wird dabei durch die Umrandung der Entlastungsöffnung 15 festgelegt und ist somit in den Beckenüberlauf 7 hinein verlagert.

Das Wasser strömt somit bei steigendem Wasserspiegel von der Beckenkammer 5 durch das Rückhalteelement 8 hindurch in den Stauraum 10 hinein und anschließend über die Entlastungsöffnung 15 bzw. die Wehrschwelle 6 in den Beckenüberlauf 7. Schmutzstoffe, die sich im Wasser befinden, werden hierbei an der Oberfläche des Rückhalteelements 8 zurückgehalten, wodurch eine wirksame Reinigung des zum Beckenüberlauf 7 strömenden Wassers erzielt wird. Zweckmäßigerweise kann auch hier bei Bedarf über eine in den Figuren nicht dargestellte Pumpe später zurückbleibendes Wasser aus der Beckenkammer 5 wieder abgepumpt und dem Kanalnetz zugeführt werden.

Zweckmäßigerweise ist im oberen Bereich der Rückhaltewand 11 ein optional vorsehbarer Notüberlauf 16 angeordnet, welcher zur Entlastung der Beckenkammer 5 hin zum Beckenüberlauf 7 dient. Für den Fall, dass das Regenüberlaufbecken 1 ausgelastet ist oder eine Verstopfung im Bereich des Rückhalteelements 8 vorliegt, kann das Wasser somit von der Beckenkammer 5 hin zum Beckenüberlauf 7 über den Notüberlauf 16 ungereinigt strömen. Der Notüberlauf 16 ist hierbei bevorzugt oberhalb der Bemessungsgrenze des Regenüberlaufbeckens 1 angeordnet. Ferner kann das Rückhalteelement 8 auch leicht geneigt eingebaut werden, sodass ein Gefälle entsteht, welches vom Stauraum 10 zur Beckenkammer 5 hin abfällt. Das Gefälle verhindert dabei, dass Sedimentationsvorgänge im Bereich des Stauraums 10 stattfinden. Es bewirkt dabei, dass sich aufstauendes Wasser im Bereich des Stauraums 10 wieder zurück zur Beckenkammer 5 fließt, sobald der Wasserspiegel im Stauraum 10 bzw. in der Beckenkammer 5 sinkt. Durch den Rückfluss des Wassers werden Verschmutzungen im Bereich des Stauraums 10 entlang des Rückhalteelements 8 zurück in die Beckenkammer 5 gespült.

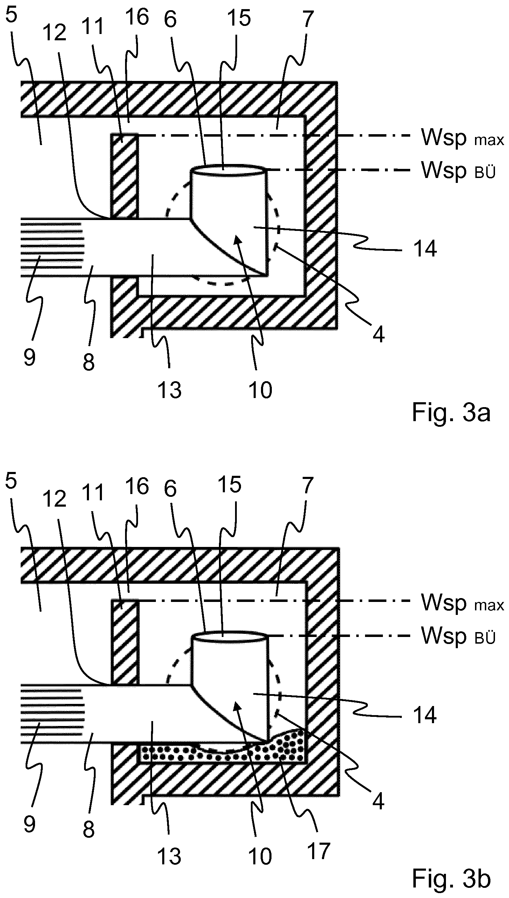

In Fig. 3a ist eine Detaildarstellung des Beckenüberlaufs 7 mit Stauraum 10 gezeigt. Die Position der Wehrschwelle 6 legt hierbei die maximale Wasserspiegellage des Beckenüberlaufs Wsp BÜ fest. Der Bereich der maximalen Wasserspiegellage des Regenüberlaufbeckens Wsp max wird durch die Aufnahmekapazität des Regenüberlaufbeckens bestimmt und liegt demnach auf Höhe des Notüberlaufs 16. Folglich ist die Wehrschwelle 6 bzw. die maximale Wasserspiegellage des Beckenüberlaufs Wsp BÜ unterhalb der maximalen Wasserspiegellage des Regenüberlaufbeckens Wsp max angeordnet. Zweckmäßigerweise kann, wie in Fig. 3b gezeigt, eine Schüttung 17 im Bereich des Beckenüberlaufs 7 vorgesehen sein, die dazu vorgesehen ist, das Rückhalteelement 8 bzw. den Verbindungskanal 13 zu stützen. Die Schüttung 17 kann beispielsweise mittels einer Einlage oder einer Gussmasse, wie z. B. Estrich oder Beton, geschaffen werden oder integraler Bestandteil des Beckenüberlaufbodens sein.

Die sich in die Beckenkammer 5 hinein erstreckende Stirnseite des Rückhalteelements 8 ist vorzugsweise geschlossen. Zudem kann das Rückhalteelement 8 mittels Befestigungen an der Rückhaltewand 11 angebracht werden. Alternativ oder zusätzlich kann das Rückhalteelement 8 auch über, in den Figuren nicht dargestellte, Befestigungsvorrichtungen an der Decke, den Wänden und/oder dem Boden des Regenüberlaufbauwerks 1 fixiert sein.

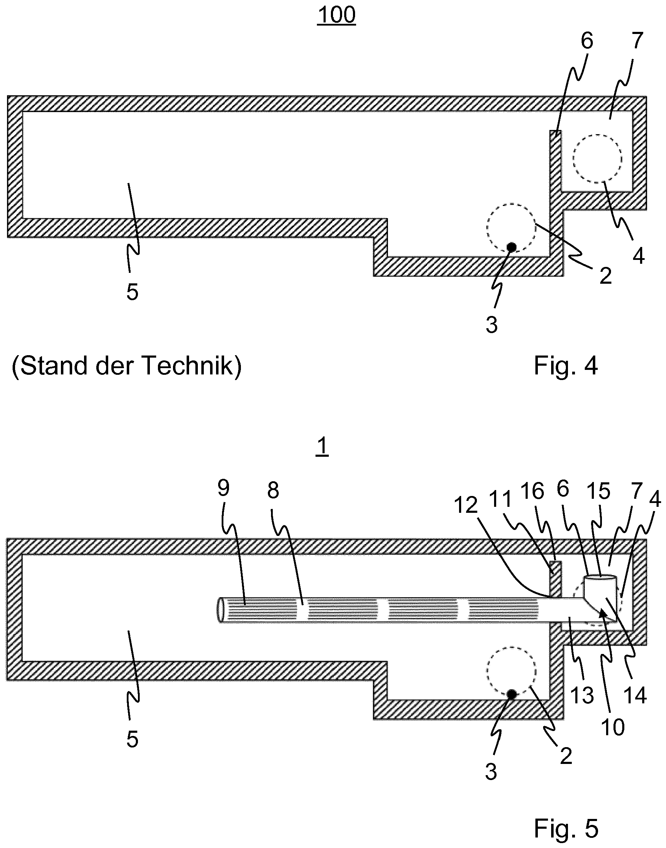

Fig. 4 zeigt eine weitere Ausgestaltung eines Regenüberlaufbeckens 100 gemäß dem Stand der Technik im Hauptschluss. Die Beckenkammer 5 wird hierbei direkt vom Zulauf 2 her mit Wasser befüllt. Für den Fall, dass die Beckenkammer 5 bis zur Ober- oder Überlaufkante der Wehrschwelle 6 mit Wasser gefüllt wird, tritt das Wasser über die Wehrschwelle 6 in den Beckenüberlauf 7, welcher anschließend über den Auslauf 4 entlastet wird. Demgegenüber ist in Fig. 5 ein erfindungsgemäßes Regenüberlaufbecken 1 im Hauptschluss dargestellt, welches ein Rückhalteelement 8 zur Reinigung des Wassers aufweist.

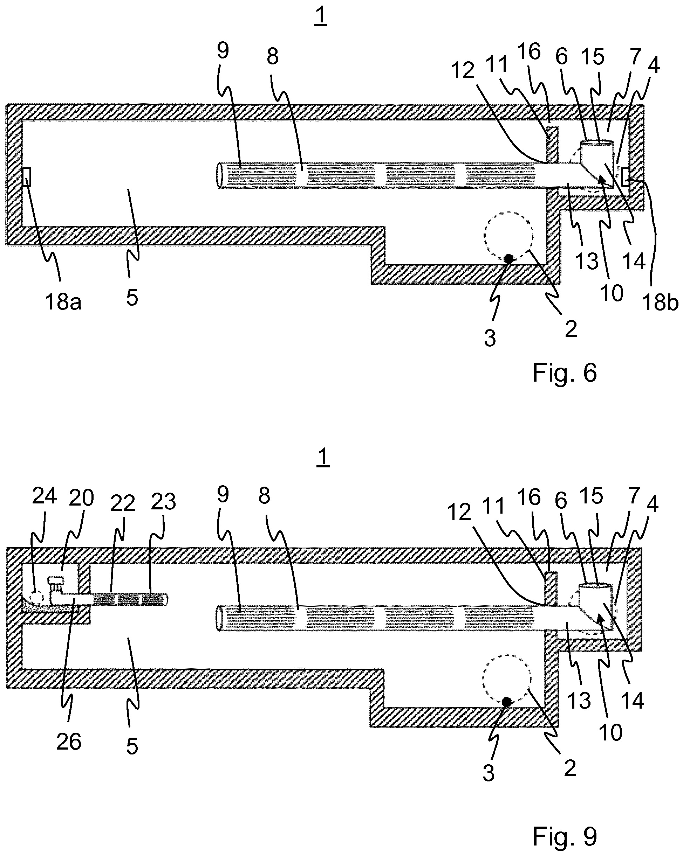

Zweckmäßigerweise kann eine Sensorik vorgesehen sein, welche z. B. dem Benutzer eine Verschmutzung des Rückhalteelements 8 anzeigt. Hierzu können Sensoreinrichtungen 18a, 18b z. B. Druckmessdosen und/oder Wasserstandsmesser im Bereich der Beckenkammer 5, des Stauraums 10 und/oder des Beckenüberlaufs 7 vorgesehen sein. Eine Sensoreinrichtung 18a kann z. B. gemäß Fig. 6, im Bereich der Beckenkammer 5 angeordnet sein. Eine weitere Sensoreinrichtung 18b befindet sich bei der in Fig. 6 dargestellten Ausführungsform im Bereich des Beckenüberlaufs 7 (und/oder des Stauraums 10). Die Sensoreinrichtungen 18a, 18b erfassen hierbei jeweils den Wasserstand und/oder Staudruck in der Beckenkammer 5 und im Beckenüberlauf 7 (bzw. und/oder im Stauraum 10). Aus der Differenz der Messwerte kann auf die Verschmutzung des Rückhalteelements 8 geschlossen werden. Ein bestimmter Wasserstandunterschied zwischen den erfassten Wasserständen in der Beckenkammer 5 und Stauraum 10 zeigen dabei einen verminderten Wasserdurchfluss zwischen Beckenkammer 5 und Stauraum 10 über das Rückhalteelement 8 an, wodurch auf eine Verschmutzung des Rückhalteelements 8 geschlossen werden kann. Infolgedessen kann ein Warnsignal z. B. an eine zentrale Leitstelle ausgegeben werden. In praktischer Weise kann die Übertragung des Warnsignals über Funk, eine Datenleitung oder dergleichen erfolgen.

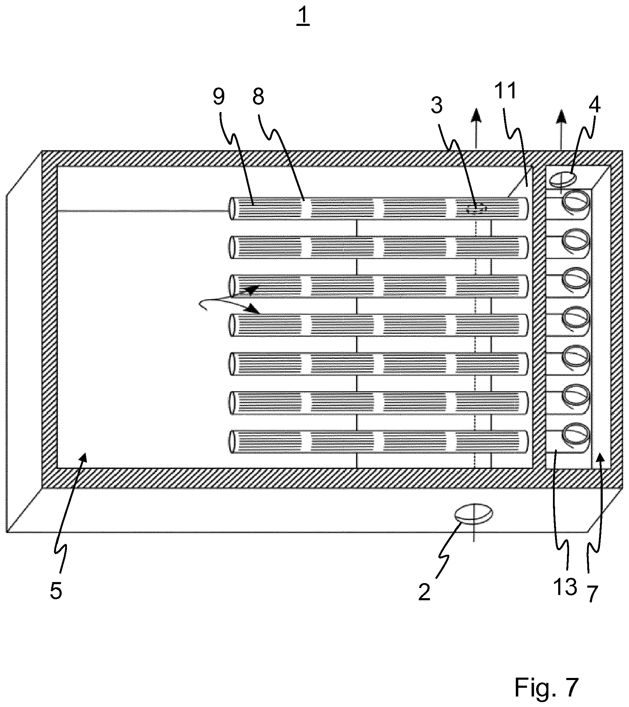

Fig. 7 zeigt eine perspektivische Draufsicht auf das erfindungsgemäße Regenüberlaufbecken 1 mit einem Batteriesystem aus mehreren Rückhalteelementen 8, die jeweils an einer Durchgangsöffnung 12 innerhalb der Rückhaltewand 11 angeordnet sind. Der Notüberlauf 16 ist der Übersichtlichkeit halber in Fig. 7 nicht dargestellt. Durch die Anordnung mehrerer Rückhalteelemente 8 kann im Vergleich zu herkömmlichen Konstruktionen die Reinigungswirkung erheblich gesteigert werden, indem eine möglichst große die Reinigungswirkung verursachende Gesamtoberfläche im Bereich der Beckenkammer 5 geschaffen wird. Dadurch kann auf zusätzliche mechanische Bauteile, wie z. B. Rechen oder Siebe entlang der Wehrschwelle 6, die eine kontinuierliche Reinigung bewirken, verzichtet werden.

Die Fließrichtung des Wassers ist in Fig. 7 mit schwarzen, teilweise gestrichelten, Pfeilen dargestellt. Die Fließrichtung des Wassers erfolgt in der Regel vom Zulauf 2 zum Ablauf 3. Im Falle eines plötzlichen Wasseranfalls z. B. im Zuge eines Starkregenereignisses wird die Beckenkammer 5 mit Wasser gefüllt. Sobald die Beckenkammer 5 bis zur Höhe der Rückhalteelemente 8 mit Wasser gefüllt ist, strömt das Wasser durch die wasserdurchlässigen, mit einer Perforation 9 versehenen Bereiche der Rückhalteelemente 8 in den Stauraum 10 hinein. Hierbei werden Schmutzstoffe an der Oberfläche der Rückhalteelemente 8 zurückgehalten, während das gereinigte Wasser durch die Durchgangsöffnungen 12 in den Stauraum 10 gelangt und sich im Stauraum 10 aufstaut. Nach dem Füllen des Stauraums 10 übertritt das Wasser die Wehrschwelle 6 und gelangt durch die Entlastungsöffnung 15 in den Beckenüberlauf 7. Vom Beckenüberlauf 7 kann das Wasser über den Auslauf 4, z. B. in einen Entlastungskanal, ein Gewässer oder dergleichen abfließen.

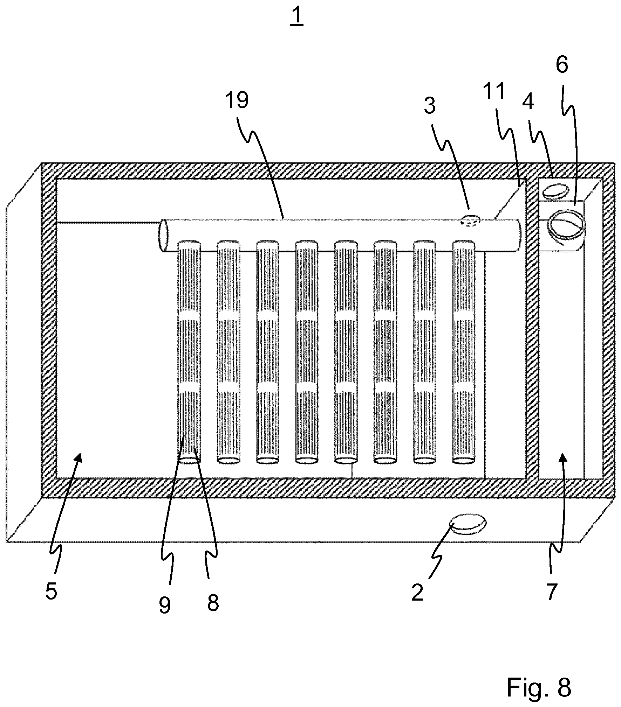

In Fig. 8 ist eine weitere zweckmäßige Ausgestaltung des erfindungsgemäßen Regenüberlaufbeckens 1 dargestellt, bei der die Rückhalteelemente 8 an einem rohrförmigen für die Rückhalteelemente 8 gemeinsamen Verbindungskanal 19 parallel angeordnet sind. Der gemeinsame Verbindungskanal 19 erstreckt sich von der Rückhaltewand 11 in die Beckenkammer 5 hinein. Durch eine derartige Ausgestaltung des Regenüberlaufbeckens 1 ist es möglich, je nach Geometrie der Beckenkammer 5, einen noch größeren Raum der Beckenkammer 5 für die Anordnung von Rückhalteelementen 8 zur Verfügung zu stellen.

Fig. 9 zeigt eine weitere vorteilhafte Ausgestaltung des erfindungsgemäßen Regenüberlaufbeckens 1 mit einem Klärüberlauf 20. Der Klärüberlauf 20 befindet sich im Bereich der Beckenkammer 5. An einer Klärüberlauföffnung 21 des Klärüberlaufs 20 hin zur Beckenkammer 5 ist ein Rückhalteelement 22 mit einer Perforation 23 angeordnet. Ferner ist dem Klärüberlauf 20 ein das Wasser entlastender Auslauf 24 nachgeschaltet. Durch die Anordnung des Rückhalteelements 22 wird das Wasser, welches von der Beckenkammer 5 hin zum Klärüberlauf 20 strömt, vor der Entlastung durch den Auslauf 24 insbesondere von Schwebstoffen gereinigt. Der Klärüberlauf 20 ist hierbei dazu hergerichtet, eine erste Entlastung der Beckenkammer 5 (z. B. die ersten 25% der Entlastung) zu ermöglichen, bevor der Beckenüberlauf 7 anspringt. Ferner kann auch im Bereich des Klärüberlaufs 20 eine Sensoreinrichtung insbesondere zur Ermittlung des Verschmutzungsgrades des Rückhalteelements 22 vorgesehen sein.

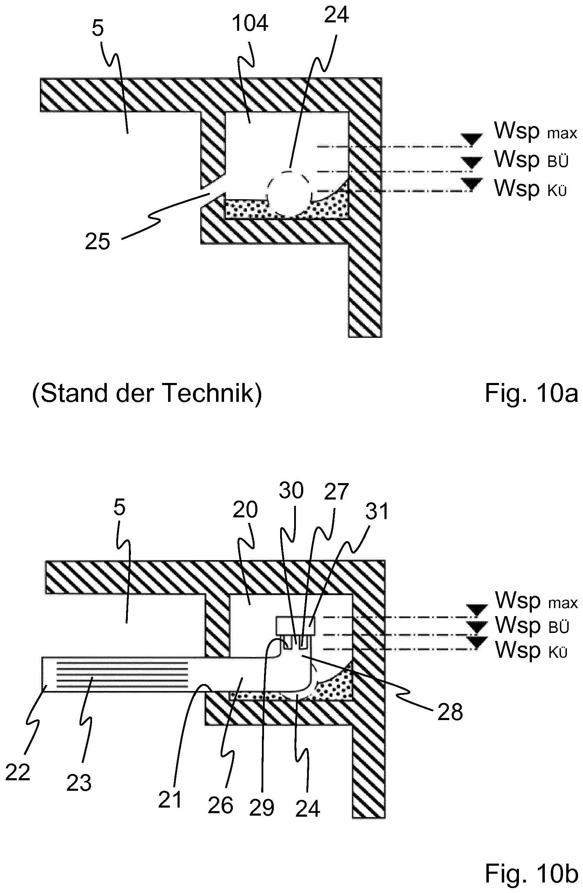

In Fig. 10a ist ein Klärüberlauf 104 gemäß dem Stand der Technik dargestellt. Der Klärüberlauf 104 ist hierbei mit der Beckenkammer 5 über einen Durchlass bzw. Schlitz 25 verbunden. Der Schlitz 25 ist zum Klärüberlauf 104 hin schräg nach oben gerichtet, wodurch die maximale Wasserspiegellage des Klärüberlaufs Wsp KÜ an der Kante des Schlitzes 25 hin zum Klärüberlauf 104 festgelegt wird. Ab der Wasserspiegellage Wsp KÜ fließt das Wasser über den Schlitz 25 in den Klärüberlauf 104. Die Entlastung der Beckenkammer 5 erfolgt ab der Wasserspiegellage Wsp KÜ über den Klärüberlauf 104 sowie dem Auslauf 24. Mit dem Erreichen der Wasserspiegellage des Beckenüberlaufs Wsp BÜ, d.h. mit dem Überströmen der Wehrschwelle 6, findet eine Entlastung der Beckenkammer 5 über den Beckenüberlauf 7 bzw. den Auslauf 4 und den Klärüberlauf 104 bzw. den Auslauf 24 statt. Das Wasser des Klärüberlaufs 104 wird hierbei z. B. über Sedimentationsvorgänge im Bereich der Beckenkammer 5 gereinigt, bevor es in den Klärüberlauf 104 eintritt. Diese Reinigungswirkung ist demzufolge gerade bei Starkregenereignissen mit hohem Wasseranfall nicht ausreichend.

In Fig. 10b ist demgegenüber eine bevorzugte Ausgestaltung eines Klärüberlaufs 20 dargestellt, welcher im Wesentlichen der Ausgestaltung des Klärüberlaufs in Fig. 9 entspricht. Der Klärüberlauf 20 ist mit der Beckenkammer 5 über eine Zulaufvorrichtung 26 des Rückhalteelements 22 verbunden. Die Zulaufvorrichtung 26 ist als Rohrkrümmer mit aufgesetzten Klärschlitzen bzw. Austrittsöffnungen 27 ausgestaltet und besitzt einen abgewinkelten Abschnitt 28, welcher sich innerhalb des Klärüberlaufs 20 befindet. Der Rohrkrümmer kann hierbei, wie auch das Rückhalteelement 8, beispielsweise aus GFK-, PVC-, PE-Rohr gefertigt sein. Gemäß Fig. 10b besitzt der Rohrkrümmer am oberen Ende des abgewinkelten Abschnitts 28 einen Entlastungsausgang 29, der durch die Austrittsöffnungen 27 gebildet wird. Die Austrittsöffnungen 27 befinden sich wiederum zwischen Stegen 30 des Rohrkrümmers. Der untere Bereich der Austrittsöffnungen 27 bildet die Wasserspiegellage des Klärüberlaufs Wsp KÜ. Beim Übersteigen der Wasserspiegellage des Klärüberlaufs Wsp KÜ springt somit der Klärüberlauf 20 an. Der obere Bereich der Austrittöffnungen 27 liegt auf dem Niveau der Wasserspiegellage des Beckenüberlaufs Wsp BÜ, d. h. diejenige Wasserspiegellage ab der der Beckenüberlauf 7 anspringt. Oberhalb der Wasserspiegellage Wsp BÜ kann der Rohrkrümmer geschlossen nach oben verlaufen oder gemäß Fig. 10b eine Kappe 31 aufweisen, welche den Rohrkrümmer nach oben hin abschließt. Die Kappe 31 ist vorzugsweise im Bereich der maximalen Wasserspiegellage des Regenüberlaufbeckens Wsp max angeordnet.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Regenüberlaufbecken
- 2: Zulauf
- 3: Ablauf
- 4: Auslauf
- 5: Beckenkammer
- 6: Wehrschwelle
- 7: Beckenüberlauf
- 8: Rückhalteelement
- 9: Perforation
- 10: Stauraum
- 11: Rückhaltewand
- 12: Durchlassöffnung
- 13: Verbindungskanal
- 14: Abschnitt
- 15: Entlastungsöffnung
- 16: Notüberlauf
- 17: Schüttung
- 18a: Sensoreinrichtung
- 18b: Sensoreinrichtung
- 19: gemeinsamer Verbindungskanal
- 20: Klärüberlauf
- 21: Klärüberlauföffnung
- 22: Rückhalteelement
- 23: Perforation
- 24: Auslauf
- 25: Schlitz
- 26: Zulaufvorrichtung
- 27: Austrittsöffnung
- 28: Abschnitt
- 29: Entlastungsausgang
- 30: Steg
- 31: Kappe
- 100: Regenüberlaufbecken gemäß Stand der Technik
- 101: Trennbauwerk
- 102: Schwelle
- 103: Ausnehmung
- 104: Klärüberlauf gemäß Stand der Technik

- Wsp KÜ: maximale Wasserspiegellage Klärüberlauf
- Wsp BÜ: maximale Wasserspiegellage Beckenüberlauf
- Wsp max: maximaler Wasserspiegel

## Patentansprüche

1. Regenüberlaufbecken (1) zum Sammeln und Speichern von Wasser, insbesondere Regen-, Misch- oder Schmutzwasser, mit
einem Zulauf (2),
einem Ablauf (3),
mindestens einer Beckenkammer (5),
mindestens einem Beckenüberlauf (7), der der Beckenkammer (5) nachgeschaltet ist,
mindestens einem Auslauf (4), welcher den Beckenüberlauf (7) entlastet, und
einer Reinigungsvorrichtung zur Reinigung des von der Beckenkammer (5) zum Beckenüberlauf (7) strömenden Wassers, wobei
zwischen Beckenkammer (5) und Beckenüberlauf (7) eine Rückhaltewand (11) vorgesehen ist, die dazu hergerichtet ist, in der Beckenkammer (5) anfallendes Wasser aufzustauen,
ein Stauraum (10) vorgesehen ist, in dem sich von der Beckenkammer (5) abfließendes Wasser aufstaut, um über eine Wehrschwelle (6) in den Beckenüberlauf (7) zu gelangen,
in der Rückhaltewand (11) eine Durchgangsöffnung (12) vorgesehen ist, und
als Reinigungsvorrichtung ein bewegungsfestes Rückhalteelement (8) vorgesehen ist, wobei
sich das Rückhalteelement (8) in die Beckenkammer (5) erstreckt, derart, dass aus der Beckenkammer (5) durch die Durchgangsöffnung (12) in den Stauraum (10) abfließendes Wasser durch das Rückhalteelement (8) hindurchströmt, und
der Stauraum (10) sowie die Wehrschwelle (6) in Form eines sich von der Rückhaltewand (11) in den Beckenüberlauf (7) erstreckenden Verbindungskanals (13) gebildet ist.

2. Regenüberlaufbecken (1) nach Anspruch 1, **dadurch gekennzeichnet, dass** der Verbindungskanal (13) einen vorzugsweise abgewinkelten Abschnitt (14) aufweist, der sich in Aufstaurichtung erstreckt.

3. Regenüberlaufbecken (1) nach Anspruch 1 oder 2, **dadurch gekennzeichnet, dass** der Verbindungskanal (13) eine in den Beckenüberlauf (7) mündende Entlastungsöffnung (15) aufweist.

4. Regenüberlaufbecken (1) nach mindestens einem der vorhergehenden Ansprüche, **dadurch gekennzeichnet, dass** der Verbindungskanal (13) in Verlängerung des Rückhaltelements (8) verlaufend angeordnet ist.

5. Regenüberlaufbecken (1) nach mindestens einem der vorhergehenden Ansprüche, **dadurch gekennzeichnet, dass** der Verbindungskanal (13) und das Rückhalteelement (8) ein Bauteil bilden.

6. Regenüberlaufbecken (1) nach mindestens einem der vorhergehenden Ansprüche, **dadurch gekennzeichnet, dass** ein Notüberlauf (16) zwischen der Beckenkammer (5) und dem Beckenüberlauf (7) vorgesehen ist.

7. Regenüberlaufbecken (1) nach mindestens einem der vorhergehenden Ansprüche, **dadurch gekennzeichnet, dass** mindestens eine Sensoreinrichtung (18a, 18b) vorgesehen ist und aus den Messdaten der Sensoreinrichtung (18a, 18b), vorzugsweise aus den Messdaten zweier Sensoreinrichtungen (18a, 18b) der Verschmutzungsgrad der Rückhalteelemente (8, 22) abgeleitet wird.

8. Regenüberlaufbecken (1) nach mindestens einem der vorhergehenden Ansprüche, **dadurch gekennzeichnet, dass** ein der Beckenkammer (5) nachgeschalteter Klärüberlauf (20) mit Auslauf (24) vorgesehen ist, der eine Klärüberlauföffnung (21) hin zur Beckenkammer (5) aufweist.

9. Regenüberlaufbecken (1) nach Anspruch 8, **dadurch gekennzeichnet, dass** ein Rückhalteelement (22) innerhalb der Beckenkammer (5) vorgesehen ist, welches sich vom Klärüberlauf (20) in die Beckenkammer (5) hinein erstreckt, sodass das von der Beckenkammer (5) durch die Klärüberlauföffnung (21) in den Klärüberlauf (20) abfließende Wasser durch das Rückhalteelement (22) hindurchströmt.

10. Regenüberlaufbecken (1) nach Anspruch 8 oder 9, **dadurch gekennzeichnet, dass** das Rückhalteelement (22) eine Zulaufvorrichtung (26) aufweist, die sich zumindest teilweise in den Klärüberlauf (20) hinein erstreckt und einen im Wesentlichen abgewinkelten Abschnitt (28) aufweist.

11. Regenüberlaufbecken (1) nach Anspruch 10, **dadurch gekennzeichnet, dass** der abgewinkelte Abschnitt (28) einen Entlastungsausgang (29) aufweist, der vorzugsweise mehrere Austrittsöffnungen (27) umfasst.

12. Regenüberlaufbecken (1) nach mindestens einem der vorhergehenden Ansprüche, **dadurch gekennzeichnet, dass** das Rückhalteelement (8, 22) zumindest bereichsweise eine vorzugsweise runde, eckige und/oder geschlitzte Perforation (9, 23) aufweist.

13. Regenüberlaufbecken (1) nach mindestens einem der vorhergehenden Ansprüche, **dadurch gekennzeichnet, dass** mehrere Rückhalteelemente (8 und/oder 22) vorgesehen sind, die vorzugsweise parallel zueinander angeordnet sind.

14. Regenüberlaufbecken (1) nach mindestens einem der vorhergehenden Ansprüche, **dadurch gekennzeichnet, dass** der Verbindungskanal als gemeinsamer Verbindungskanal (19) ausgebildet ist, welcher sich in die Beckenkammer (5) hinein erstreckt und in das mindestens ein Rückhalteelement (8) mündet, vorzugsweise mehrere Rückhalteelemente (8) münden.

## Claims

1. Rain overflow tank (1) for collecting and storing water, in particular rainwater, mixed water or dirty water, having
an inflow (2),
an outflow (3),
at least one tank chamber (5),
at least one tank overflow (7) which is arranged downstream of the tank chamber (5),
at least one outlet (4) which relieves the tank overflow (7), and
a cleaning device for cleaning the water flowing from the tank chamber (5) to the tank overflow (7), wherein
a retaining wall (11) is provided between the tank chamber (5) and tank overflow (7) and is configured to impound water arising in the tank chamber (5),
an impounding space (10) is provided in which water flowing off from the tank chamber (5) is impounded in order to pass into the tank overflow (7) via a weir cill (6),
a through-opening (12) is provided in the retaining wall (11), and
the cleaning device provided is a movement-fixed retaining element (8), wherein
the retaining element (8) extends into the tank chamber (5) in such a way that water flowing off out of the tank chamber (5) through the through-opening (12) into the impounding space (10) flows through the retaining element (8), and
the impounding space (10) and the weir cill (6) are formed in the form of a connecting duct (13) extending from the retaining wall (11) into the tank overflow (7).

2. Rain overflow tank (1) according to Claim 1, **characterized in that** the connecting duct (13) has a preferably angled portion (14) which extends in the impounding direction.

3. Rain overflow tank (1) according to Claim 1 or 2, **characterized in that** the connecting duct (13) has a relief opening (15) opening into the tank overflow (7).

4. Rain overflow tank (1) according to at least one of the preceding claims, **characterized in that** the connecting duct (13) is arranged so as to extend in the extension of the retaining element (8).

5. Rain overflow tank (1) according to at least one of the preceding claims, **characterized in that** the connecting duct (13) and the retaining element (8) form a component.

6. Rain overflow tank (1) according to at least one of the preceding claims, **characterized in that** an emergency overflow (16) is provided between the tank chamber (5) and the tank overflow (7).

7. Rain overflow tank (1) according to at least one of the preceding claims, **characterized in that** at least one sensor device (18a, 18b) is provided, and the degree of contamination of the retaining elements (8, 22) is derived from the measurement data of the sensor device (18a, 18b), preferably from the measurement data of two sensor devices (18a, 18b).

8. Rain overflow tank (1) according to at least one of the preceding claims, **characterized in that** a clarifying overflow (20) arranged downstream of the tank chamber (5) and having an outlet (24) is provided and has a clarifying overflow opening (21) towards the tank chamber (5).

9. Rain overflow tank (1) according to Claim 8, **characterized in that** a retaining element (22) is provided within the tank chamber (5) and extends from the clarifying overflow (20) into the tank chamber (5) such that water flowing off from the tank chamber (5) through the clarifying overflow opening (21) into the clarifying overflow (20) flows through the retaining element (22).

10. Rain overflow tank (1) according to Claim 8 or 9, **characterized in that** the retaining element (22) has an inflow device (26) which extends at least partially into the clarifying overflow (20) and has a substantially angled portion (28).

11. Rain overflow tank (1) according to Claim 10, **characterized in that** the angled portion (28) has a relief outlet (29) which preferably comprises a plurality of outlet openings (27).

12. Rain overflow tank (1) according to at least one of the preceding claims, **characterized in that** the retaining element (8, 22) has, at least in certain regions, a preferably round, polygonal and/or slotted perforation (9, 23).

13. Rain overflow tank (1) according to at least one of the preceding claims, **characterized in that** a plurality of retaining elements (8 and/or 22) are provided which are preferably arranged parallel to one another.

14. Rain overflow tank (1) according to at least one of the preceding claims, **characterized in that** the connecting duct is designed as a common connecting duct (19) which extends into the tank chamber (5) and into which at least one retaining element (8), preferably a plurality of retaining elements (8), opens or open.

## Revendications

1. Bassin à trop-plein d'eau pluviale (1) destiné à collecter et à stocker de l'eau, en particulier de l'eau de pluie, de l'eau mélangée ou des eaux usées, comprenant
une entrée (2),
un écoulement (3),
au moins une chambre de bassin (5),
au moins un trop-plein de bassin (7) qui est monté en aval de la chambre de bassin (5),
au moins une sortie (4) qui déleste le trop-plein de bassin (7), et
un dispositif d'épuration pour l'épuration de l'eau s'écoulant depuis la chambre de bassin (5) jusqu'au trop-plein de bassin (7),
une paroi de retenue (11) étant prévue entre la chambre de bassin (5) et le trop-plein de bassin (7), laquelle est aménagée pour accumuler l'eau parvenant dans la chambre de bassin (5),
un espace d'accumulation (10) étant prévu, dans lequel s'accumule l'eau s'écoulant depuis la chambre de bassin (5) afin de parvenir par le biais d'un seuil de déversoir (6) dans le trop-plein de bassin (7),
une ouverture de passage (12) étant prévue dans la paroi de retenue (11), et
un élément de retenue (8) solidaire en mouvement étant prévu en tant que dispositif d'épuration,
l'élément de retenue (8) s'étendant dans la chambre de bassin (5) de telle sorte que l'eau s'écoulant à partir de la chambre de bassin (5) à travers l'ouverture de passage (12) dans l'espace d'accumulation (10) s'écoule à travers l'élément de retenue (8), et
l'espace d'accumulation (10) ainsi que le seuil de déversoir (6) sont formés sous la forme d'un canal de liaison (13) s'étendant depuis la paroi de retenue (11) dans le trop-plein de bassin (7).

2. Bassin à trop-plein d'eau pluviale (1) selon la revendication 1, **caractérisé en ce que** le canal de liaison (13) comprend une partie (14) de préférence coudée qui s'étend dans la direction d'accumulation.

3. Bassin à trop-plein d'eau pluviale (1) selon la revendication 1 ou 2, **caractérisé en ce que** le canal de liaison (13) comprend une ouverture de délestage (15) débouchant dans le trop-plein de bassin (7).

4. Bassin à trop-plein d'eau pluviale (1) selon au moins l'une des revendications précédentes, **caractérisé en ce que** le canal de liaison (13) est disposé de manière à s'étendre dans le prolongement de l'élément de retenue (8).

5. Bassin à trop-plein d'eau pluviale (1) selon au moins l'une des revendications précédentes, **caractérisé en ce que** le canal de liaison (13) et l'élément de retenue (8) forment un composant.

6. Bassin à trop-plein d'eau pluviale (1) selon au moins l'une des revendications précédentes, **caractérisé en ce qu'**un trop-plein de secours (16) est prévu entre la chambre de bassin (5) et le trop-plein de bassin (7).

7. Bassin à trop-plein d'eau pluviale (1) selon au moins l'une des revendications précédentes, **caractérisé en ce qu'**au moins un dispositif de détection (18a, 18b) est prévu et, à partir des données de mesures du dispositif de détection (18a, 18b), de préférence à partir des données de mesures de deux dispositifs de détection (18a, 18b), le degré d'encrassement des éléments de retenue (8, 22) est déduit.

8. Bassin à trop-plein d'eau pluviale (1) selon au moins l'une des revendications précédentes, **caractérisé en ce qu'**un trop-plein de clarification (20) monté en aval de la chambre de bassin (5) et doté d'une sortie (24) est prévu, lequel comprend une ouverture de trop-plein de clarification (21) en direction de la chambre de bassin (5).

9. Bassin à trop-plein d'eau pluviale (1) selon la revendication 8, **caractérisé en ce qu'**un élément de retenue (22) est prévu à l'intérieur de la chambre de bassin (5), lequel s'étend depuis le trop-plein de clarification (20) dans la chambre de bassin (5), de sorte que l'eau s'écoulant depuis la chambre de bassin (5) à travers l'ouverture de trop-plein de clarification (21) dans le trop-plein de clarification (20) s'écoule à travers l'élément de retenue (22).

10. Bassin à trop-plein d'eau pluviale (1) selon la revendication 8 ou 9, **caractérisé en ce que** l'élément de retenue (22) comprend un dispositif d'entrée (26) qui s'étend au moins partiellement dans le trop-plein de clarification (20) et comprend une partie (28) sensiblement coudée.

11. Bassin à trop-plein d'eau pluviale (1) selon la revendication 10, **caractérisé en ce que** la partie coudée (28) comprend une sortie de délestage (29) qui comporte de préférence plusieurs ouvertures de sortie (27) .

12. Bassin à trop-plein d'eau pluviale (1) selon au moins l'une des revendications précédentes, **caractérisé en ce que** l'élément de retenue (8, 22) comprend au moins dans certaines zones une perforation (9, 23) de préférence ronde, polygonale et/ou fendue.

13. Bassin à trop-plein d'eau pluviale (1) selon au moins l'une des revendications précédentes, **caractérisé en ce que** plusieurs éléments de retenue (8 et/ou 22) sont prévus, lesquels sont disposés de préférence parallèlement les uns aux autres.

14. Bassin à trop-plein d'eau pluviale (1) selon au moins l'une des revendications précédentes, **caractérisé en ce que** le canal de liaison est réalisé en tant que canal de liaison (19) commun, lequel s'étend dans la chambre de bassin (5) et débouche dans l'au moins un élément de retenue (8), de préférence dans plusieurs éléments de retenue (8).
